# EUROPÄISCHE PATENTSCHRIFT

(11) **EP 0 793 028 B1**
(45) Veröffentlichungstag und Bekanntmachung des Hinweises auf die Patenterteilung: **31.07.2002**
(21) Anmeldenummer: 97250043.3
(22) Anmeldetag: 25.02.1997
(51) Int. Cl.: F16C 1/22, E05F 11/48

(54) **Vorrichtung für einem Seillängenausgleich bei Bowdenrohr-Fensterhebern**
Length-adjusting device for bowden cable actuated window lifters
Dispositif de réglage de la longueur d'un câble bowden pour lève-glaces

(30) Priorität: 28.02.1996 DE 19609255
(43) Veröffentlichungstag der Anmeldung: 03.09.1997
(73) Patentinhaber: Brose Fahrzeugteile GmbH & Co. KG, 96450 Coburg (DE); Dr.Ing. h.c. F. Porsche Aktiengesellschaft, 71287 Weissach (DE)
(72) Erfinder: Karl, Werner, 96317 Kronach (DE); Hillgärtner, Klaus, 75449 Wurmberg (DE)
(74) Vertreter: Müller, Wolfram Hubertus, Dipl.-Phys.

(56) Entgegenhaltungen:
- EP-A- 0 318 720
- EP-A- 0 607 588
- FR-A- 2 441 711
- FR-A- 2 691 766
- US-A- 4 658 668

## Beschreibung

Die Erfindung betrifft eine Vorrichtung für einen Seillängenausgleich bei Bowdenrohr-Fensterhebern gemäß dem Oberbegriff des Anspruchs 1.

Bowdenzüge zeichnen sich dadurch aus, daß ein zwischen einem Antriebs- und einem Getriebeelement gespanntes Seil in einem Rohr oder Schlauch geführt wird. Hierdurch wird ermöglicht, das Seil auf an die konkreten Bedingungen am Einsatzort angepaßten Wegen zwischen Antriebs- und Getriebeelement zu führen. Im Stand der Technik sind zahlreiche Vorrichtungen bekannt, bei denen bei einer Längung des Seils oder einer Verkürzung des Bowdenrohrs das Bowdenrohr mittels einer Druckfeder von einer ortsfesten Lagerstelle hinweggedrückt und damit praktisch verlängert wird, wodurch das Seil wieder gespannt und eine spielfreie Betätigung des Seils sichergestellt wird.

Aus der DE 38 05 046 C2 ist eine gattungsgemäße Vorrichtung für einen Seillängenausgleich bekannt, bei der ein Paket parallel liegender, quer zur Rohrachse verschiebbarer Distanzscheiben vorgesehen ist, die auf dem Bowdenrohr aufliegen und nacheinander vor das Rohrende fallen, wenn dieses infolge einer Seillängung oder Rohrverkürzung durch eine Druckfeder aus einer ortsfesten Lagerstelle gedrückt wird. Durch die eingefallenen Distanzscheiben wird ein entstandenes Spiel wieder ausgeglichen. Weiter verhindern die Distanzscheiben, daß bei einer Belastung des Bowdenzugs die Druckfeder zusammengedrückt wird und eine Rückstellbewegung des Bowdenrohrendes stattfindet. Ein Umkehrspiel bei wechselnden Belastungen des Bowdenzugs wird somit ausgeschlossen. Für ein Zurücksetzen bereits eingefallener Distanzscheiben ist ein durch Langlöcher der Distanzscheiben gestecktes Stift vorgesehen.

Aus der DE 38 18 323 C1 oder EP-A-318720 ist ebenfalls eine gattungsgemäße Vorrichtung für einen Seillängenausgleich bekannt, bei der wie bei der DE 38 05 046 C2 auf dem Bowdenrohr aufliegende Distanzscheiben vorgesehen sind. Um etwa bei einer Reparatur des Bowdenzugs ein Zurücksetzen der Distanzscheiben in ihre Ausgangslage zu ermöglichen, sind die Distanzscheiben und das Bowdenrohrende in ihrer Form derart aufeinander abgestimmt, daß nach einer 90°-Drehung des Bowdenrohrendes dieses durch die Scheiben hindurch in seine Ausgangsposition zurückschiebbar ist und bei einer nachfolgenden 90°-Rückdrehung des Bowdenrohrendes die Distanzscheiben in ihre Ausgangslage zurückgesetzt werden.

Die beiden bekannten gattungsgemäßen Vorrichtungen zeichnen sich durch eine große Anzahl zusammenwirkender Teile aus. Sie sind daher relativ teuer in der Herstellung. Auch ist es nicht möglich, diese bekannten Vorrichtungen in serienmäßig für Bowdenzüge verwendete Teile zu integrieren. Vielmehr sind aufgrund der Komplexität dieser Vorrichtungen eigene Konstruktionen erforderlich.

Der Erfindung liegt die Aufgabe zugrunde, eine Vorrichtung für einen Seillängenausgleich bei Bowdenrohr-Fensterhebern zur Verfügung zu stellen, die sich durch einen einfachen Aufbau auszeichnet und eine Rückstellbewegung des Bowdenrohrendes auch bei vergleichsweise hoher Belastung und gegebenenfalls Verschmutzung sicher und mit einer feinstufigen Rasterung ausschließt.

Diese Aufgabe wird erfindungsgemäß durch eine Vorrichtung mit den Merkmalen des Kennzeichnungsteils des Anspruchs 1 gelöst. Bevorzugte Ausgestaltungen der Erfindung sind in den Unteransprüchen angegeben.

Eine erfindungsgemäße Lösung schafft durch Verwendung von Rastfedern, die in im Führungselement vorgesehene Schlitze einsetzbar sind, eine besonders einfache Vorrichtung für einen Seillängenausgleich. Bereits vorhandene Serienteile werden durch lediglich ein neues Element, nämlich die Rastfedern, ergänzt. Die Schlitze im Führungselement, in die die Rastfedern einsetzbar sind, können dabei serienmäßig vorgesehen werden.

Bei einer auftretenden Seillose wird der das Ende des Bowdenrohrs bildende Führungsabschnitt zur Straffung des Seils mittels der Druckfeder aus dem Führungselement gedrückt. Dabei schnappen die einzelnen Rastfedern erfindungsgemäß sukzessive vor das Ende des Führungsabschnitts und verhindern durch Formschluß eine Rückstellbewegung des Führungsabschnitts bei auftretenden Belastungen des Bowdenzugs. Die erfindungsgemäße Lösung verhindert dabei ein Umkehrspiel auch bei großen, durch den Bowdenzug zu übertragenen Kräften, da die vor das Ende des Führungsabschnitts schnappenden Rastfedern ein festes Widerlager für eine auf das Seil ausgeübte Kraft darstellen. Die erfindungsgemäße Lösung ist auch unempfindlich gegenüber Verschmutzungen, da die Rastfedern unempfindliche Teile darstellen.

Weiter zeichnet sich die erfindungsgemäße Lösung dadurch aus, daß die Rastfedern etwa bei Reparaturarbeiten in einfacher Weise durch Herausziehen aus den Schlitzen entfernbar sind und auf diese Weise der Führungsabschnitt entgegen der Druckkraft des Federmechanismus wieder in das Führungselement einschiebbar ist.

In einer bevorzugten Ausgestaltung der ersten erfindungsgemäßen Lösung bilden die Rastfedern jeweils zwei Schenkel aus, die mit ihren Innenseiten radial auf das Bowdenrohr bzw. den Führungsabschnitt drücken und bei einem Herausdrücken des Führungsabschnittes aus dem Führungselement vor das Ende des Führungsabschnitts schnappen. Die Schenkel der Rastfedern liegen dabei im nicht eingeschnappten Zustand mit ihren Innenseiten bevorzugt formschlüssig am Führungsabschnitt an.

Die Schenkel der Rastfedern weisen an ihren unteren Enden mit Vorteil einen Vorsprung auf, durch den die Rastfedern in der eingeschnappten Position am Führungselement fixiert werden. Hierdurch wird verhindert, daß die eingeschnappten Rastfedern aus den jeweiligen Schlitzen herausfallen können. Die Rastfedern sind bevorzugt als Drahformfedern ausgebildet und bestehen insbesondere aus Draht oder Blech. Durch Ausbildung der Rastfedern als Drahtformfedern wird ein einfach herzustellendes und billiges Federelement zur Verfügung gestellt.

Das mit einem axialen Durchgang für das Bowdenrohrende bzw. das in diesem geführte Seil versehene ortsfeste Führungselement bildet bevorzugt einen einstückigen Bestandteil eines Antriebs- oder Getriebeelements, insbesondere des Lagerdeckels eines Antriebs- oder Getriebeelements aus. Es liegt jedoch ebenfalls im Rahmen der Erfindung, daß das mit Schlitzen versehene Führungselement ein gesondertes Teil darstellt, das als Verbindungsstück zwischen Bowdenrohrende und Antriebs- bzw. Getriebeelement dient.

Der das Ende des Bowdenrohres bildende Führungsabschnitt ist bevorzugt eine fest auf das Bowdenrohrende aufgesetzte Führungshülse, die aus einem hochbelastbaren Kunststoff besteht. Die Führungshülse wird dabei in dem axialen Durchgang des Führungselements geführt. Bei einem Herausdrücken der Führungshülse aus dem Führungselement schnappen die Rastfedern nacheinander vor die Stirnseite der Führungshülse. Durch Verwendung eines hochbelastbaren Kunststoffs tritt bei einem Herausdrücken der Führungshülse aus dem Führungselement und durch die anliegenden Rastfedern ein nur minimaler Materialverschleiß auf.

Alternativ ist das Bowdenrohrende direkt als Führungsabschnitt ausgebildet.

Die Erfindung wird nachfolgend unter Bezugnahme auf die Figuren der Zeichnung anhand mehrerer Ausführungsbeispiele näher erläutert. Es zeigen
- Fig. 1 -: schematisch einen Längsschnitt durch eine erfindungsgemäße Vorrichtung für einen Seillängenausgleich;
- Fig. 2 -: einen Querschnitt durch eine erfindungsgemäße Vorrichtungs im Bereich einer Rastfeder;
- Fig. 3 -: einen Lagerdeckel zur Aufnahme einer Seiltrommel mit einem mit Schlitzen versehenen, vorstehenden Gehäuseteil zur Aufnahme eines Bowdenrohrs;
- Fig. 4 -: eine Ansicht der Innenseite des Lagerdeckels der Figur 3;
- Fig. 5 -: einen Lagerdeckel für eine Seiltrommel mit einer erfindungsgemäßen Vorrichtung für einen Seillängenausgleich und
- Fig. 6 -: eine Führungshülse, deren Ende Stufen mit verringertem Durchmesser aufweist.

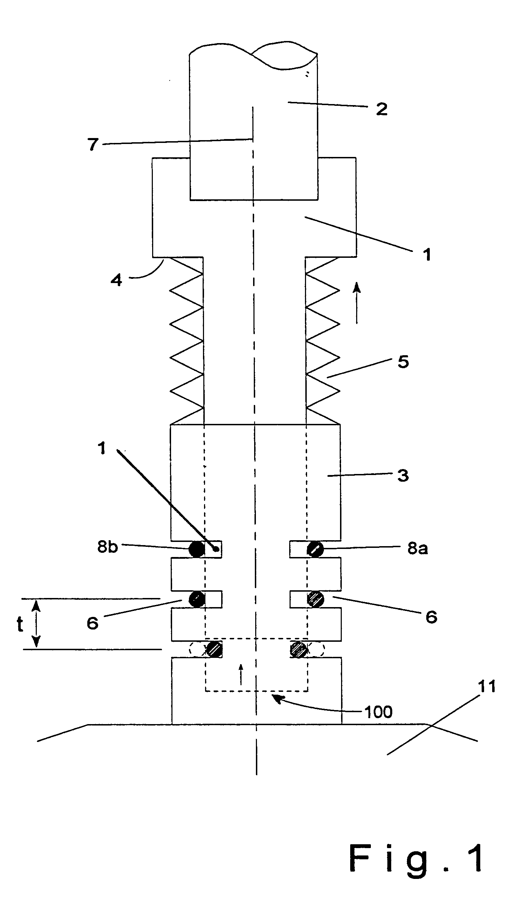

In Figur 1 ist eine erfindungsgemäße Vorrichtung für einen Seillängenausgleich schematisch dargestellt. In einem Bowdenrohr 2 wird in an sich bekannter Weise das Seil (nicht dargestellt) eines Bowdenzugs geführt, das zwischen einem Antriebs- und einem Getriebeelement zur Übertragung von Zugkräften gespannt ist. Das Ende des Bowdenrohrs 2 weist einen Führungsabschnitt auf, der durch eine aus einem hochbelastbaren Kunststoff bestehende Führungshülse 1 gebildet wird, die fest auf das Bowdenrohr 2 aufgesetzt und mit diesem verbunden ist. Die Führungshülse 1 weist dabei eine Abstufung in ihrem Außendurchmesser auf und bildet an dieser Stelle einen Bund 4 aus.

Das Ende der Führungshülse 1 ist in eine Axialbohrung eines Führungselements 3 eingeführt und in dieser axial verschiebbar. Zwischen dem Führungselement 3 und dem Bund 4 der Führungshülse 1 ist eine Druckfeder 5 angeordnet, die bestrebt ist, die Führungshülse 1 aus dem Führungselement 3 herauszudrücken. Das Führungselement 3 bildet einen einstückigen Bestandteil des Lagerdeckels eines in Fig. 1 angedeuteten Antriebs- oder Getriebeelements 11 aus.

Im Führungselement 3 sind Schlitze 6 vorgesehen, die quer zur Achse 7 der Führungshülse 1 bzw. des Führungselements 3 verlaufen und hintereinander in Bezug auf die Achse 7 im Abstand t angeordnet sind. In jeden Schlitz 6 ist eine aus Draht oder Blech bestehenden Drahtformfeder von außen eingeführt. Die Drahtformfeder weist zwei Schenkel 8a, 8b auf, die mit ihren Innenseiten in der Darstellung der Figur 1 auf der rechten und linken Seite jeweils radial gegen die eingeführte Führungshülse 1 drücken. Die Schenkel liegen kraft- und formschlüssig an der Führungshülse 1 an.

Die Funktionsweise der erfindungsgemäßen Vorrichtung für einen Seillängenausgleich ist wie folgt. Bei der Montage eines Bowdenzugs wird die Führungshülse 1 soweit wie möglich in die Axialbohrung des Führungselements 3 eingeführt. Die Drahtformfedern liegen mit ihren Schenkeln 8a, 8b unter Vorspannung an den Innenseiten der Führungshülse 1 an. Durch die Druckfeder 5 wird das Bowdenrohr 2 auf eine Länge gedrückt wird, bei der das Seil spielfrei im Bowdenrohr 2 geführt wird. Erfolgt während des Betriebes des Bowdenzugs durch eine Dehnung des Seils eine Seillängung, so wird mit zunehmender Seillängung die verschiebbare Führungshülse 1 durch die Druckfeder 5 aus dem Führungselement 3 nach und nach herausgedrückt. Dies führt quasi zu einer Verlängerung des Bowdenrohrs 2.

Sobald die Führungshülse 1 an einem Schlitz 6 vorbei aus dem Führungselement 3 herausgedrückt wird, schnappen die unter Vorspannung stehenden Schenkel 8a, 8b der entsprechenden Rastfeder vor die Stirnseite 100 der Führungshülse 1. Die Rastfeder bildet ein Widerlager für auf das Bowdenseil ausgeübte Kräfte und blockiert eine Rückstellbewegung der Führungshülse 1.

In der Darstellung der Figur 1 ist die untere Rastfeder bereits hinter der Stirnseite 100 der Führungshülse 1 eingeschnappt. Die beiden davor befindlichen Rastfedern liegen weiterhin unter Vorspannung am Umfang der Führungshülse 1 an. Wenn bei zunehmender Seillängung die Führungshülse 1 weiter aus dem Führungselement 3 herausgeschoben wird, schnappen auch die weiteren Rastfedern sukzessive vor der Stirnseite 100 der Führungshülse 1 ein und bilden dadurch jeweils ein Widerlager.

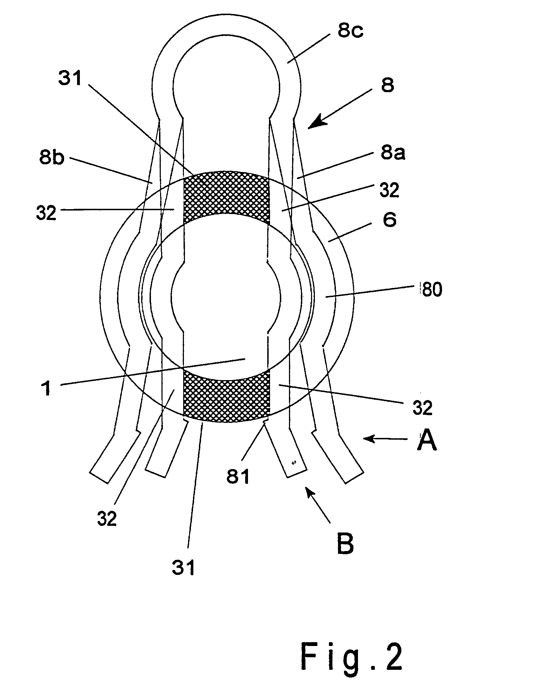

Figur 2 verdeutlicht die beiden verschiedenen Spannzustände, in denen sich eine Rastfeder 8 befinden kann. Die Rastfeder 8 mit den beiden Schenkeln 8a, 8b ist in den Schlitz 6 des Führungselements 3 eingesteckt. Im Bereich des Schlitzes 6 ist das Führungselement 3 auf ein oberes und ein unteres Kreissegment 31 reduziert. Die Rastfeder 8 weist einen kreisförmigen Haltebereich 8c auf, der die Schenkel 8a, 8b miteinander verbindet und über den die Feder 8 zum Einsetzen in den Schlitz 4 bzw. Herausnehmen aus dem Schlitz 6 erfaßt werden kann.

In der Stellung A liegt die Rastfeder 8 unter Vorspannung formschlüssig am Umfang der Führungshülse 1 an. Für eine formschlüssige Anlage an die Führungshülse 1 ist die Rastfeder 8 an ihren Schenkeln 8a, 8b jeweils im Anlagebereich 80 kreisförmig ausgebildet. In Position B sind die beiden vorgespannten Schenkel 8a, 8b der Rastfeder 8, nachdem die Führungshülse 1 zum Ausgleich einer Seillose etwas aus dem Führungselement 3 herausgedrückt wurde, vor die Stirnseite der Führungshülse 1 geschnappt. Ein unterer Vorsprung 81 der beiden Schenkel kommt dabei unter dem Abschnitt 31 des Führungselements 3 zur Anlage und bewirkt, daß die Rastfeder 8 nur unter Kraftaufwendung aus dem Schlitz 6 wieder herausgezogen werden kann. Dadurch wird der Sitz der nun als Widerlager dienenden Rastfeder 8 im Führungselement 3 gesichert und verhindert, daß die Restfeder 8 ungewollt aus dem Schlitz 6 herausfällt.

Bei einer Belastung des Bowdenzugs drückt die Führungshülse 1 mit ihrer Stirnseite gegen die eine Rückstellbewegung der Führungshülse 1 blockierende, eingeschnappte Rastfeder 8. Die dabei auftretenden axialen Kräfte werden durch Flächenpressung von der Rastfeder 8 aufgenommen und auf das Führungselement 3 übertragen. Dazu liegt die Rastfeder 8 an gegenüberliegenden Anlagebereichen 32 an der Wand des Führungselementes 3 an und stützt sich an dieser ab.

Die Rastfedern 8 sind, etwa bei einem Ausbau des Bowdenzugs im Rahmen von Reparaturarbeiten, in einfacher Weise durch Ziehen an den Haltebereichen 8c wieder aus den Schlitzen 6 entfernbar, so daß die Führungshülse 1 entgegen der Kraft der Druckfeder 5 in das Führungselement gedrückt werden kann. Es muß zum Zurückstellen der Rastfedern 8 lediglich die durch die Vorsprünge 81 bewirkte Haltekraft überwunden werden.

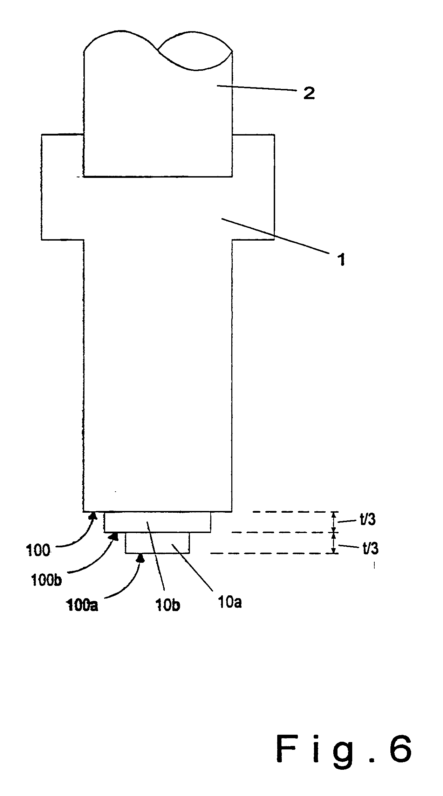

Figur 6 zeigt eine Führungshülse 1, bei der die Stirnseite eine Stufung aufweist. So sind am Ende der Führungshülse 1 zwei Stufen 10a, 10b mit verringertem Durchmesser vorgesehen, die Anschlagflächen 100a, 100b aufweisen. Im übrigen ist die Vorrichtung für einen Seillängenausgleich bevorzugt wie in Fig. 1 ausgeführt. Die Höhe jeder Stufe 10a, 10b beträgt ein Drittel des Abstands t zwischen zwei benachbarten Rastfedern 8 (vgl. Fig 1).

Bei einem Herausdrücken der Führungshülse 1 aus dem Führungselement 3 schnappt eine Rastfeder 8 nicht sogleich vollständig vor das Ende der Führungshülse 1, sondern zunächst bis an den Umfang der ersten Stufe 10b bzw. an den Umfang der zweiten Stufe 10a. Entsprechend steht eine Rastfeder 8 zunächst in Eingriff mit der Anschlagfläche 100 der Führungshülse 1, dann in Eingriff mit der Anschlagfläche 100b der ersten Stufe 10b und schließlich in Eingriff mit der Anschlagfläche 100a der zweiten Stufe 10a, wobei in jeder Position eine Rückstellbewegung der Führungshülse 1 blockiert ist. Hierdurch wird eine feinstufige Verstellung der Führungshülse 1 ermöglicht. Eine Rückstellbewegung der Führungshülse 1 wird mit einer feineren Rasterung verhindert, als dies ohne die Verwendung der Stufen 10a, 10b möglich wäre.

In alternativen Ausführungsformen sind lediglich eine Stufe oder auch mehr als zwei Stufen vorgesehen. Die Höhe der einzelnen Stufen beträgt dabei jeweils einen Bruchteil des Abstands t zwischen zwei benachbarten Rastfedern 8.

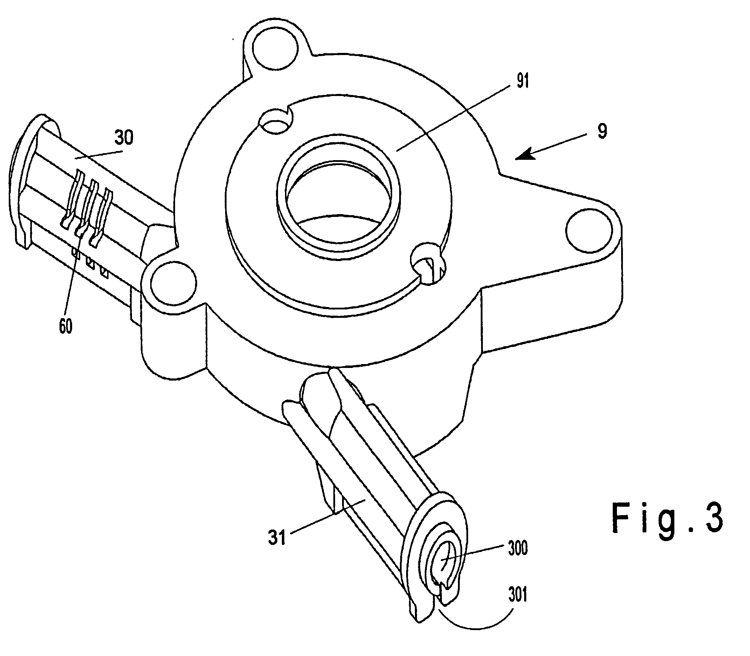

Die Figuren 3 bis 5 zeigen die erfindungsgemäße Vorrichtung an dem Gehäuse einer Seiltrommel, wie sie insbesondere bei Bowdenrohr-Fensterhebern verwendet wird. Eine von einer Handkurbel oder einem Motor (nicht dargestellt) ausgehende Antriebskraft wird dabei über die Seiltrommel auf eine geschlossene Seilschlaufe übertragen. Die Seilschlaufe ist mit mehreren Umschlingungen um die angetriebene Seiltrommel gewickelt. Im Bereich zwischen einer oberen und einer unteren Seilumlenkrolle ist die Seilschlaufe über einen Mitnehmer mit einer zu betätigenden Fensterscheibe gekoppelt. Derartige Bowdenrohr-Fensterheber sind an sich bekannt.

Figur 3 zeigt einen Lagerdeckel 9 für die Seiltrommel eines Bowdenrohr-Fensterhebers. Der Lagerdeckel 9 weist einen mittleren Aufnahmebereich 91 zur Aufnahme einer Seiltrommel (nicht dargestellt) auf. Als Seilausgänge für die geschlossene Seilschlaufe sind zwei abstehende Gehäuseteile 30, 31 vorgesehen. Die Gehäuseteile 30, 31 weisen jeweils eine Axialbohrung 300 zur Aufnahme des Endes einer Führungshülse eines Bowdenrohres auf. Außerdem sind sie mit einem Längsschlitz 301 versehen, durch den das Seil eingelegt werden kann.

Im Gehäuseteil 30 sind hintereinander senkrecht zur Längsachse der Axialbohrung 300 angeordnete Schlitze 60 vorgesehen. In diese Schlitze 60 sind jeweils Rastfedern einsetzbar. Der Lagerdeckel 9 mit den Gehäuseteilen 30, 31 und Schlitzen 60 ist serienmäßig herstellbar.

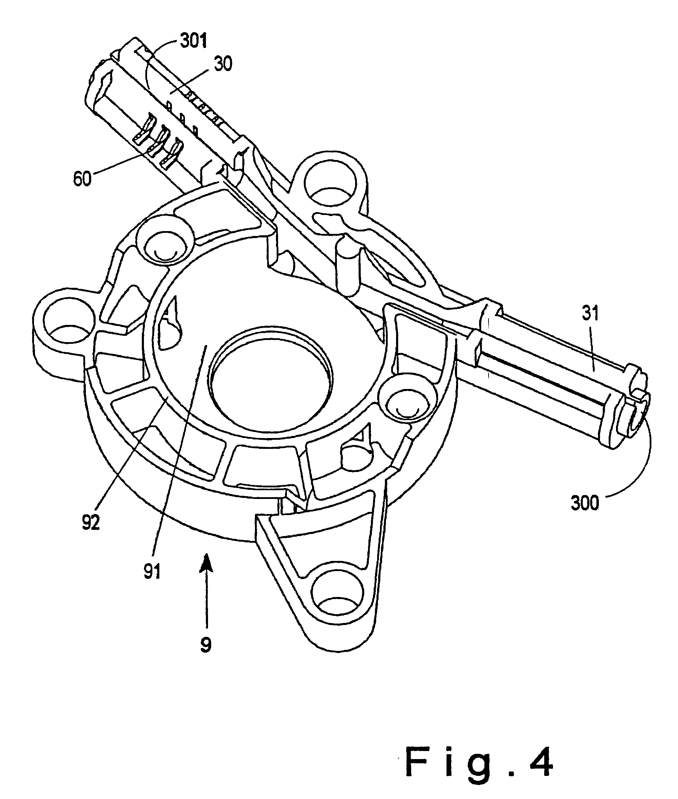

In Figur 4 ist die Innenseite des Lagerdeckel 9 der Figur 3 dargestellt. Es ist gut der Aufnahmebereich 91 zur Aufnahme einer Seiltrommel erkennbar. Der Aufnahmebereich 91 wird von einem inneren Stützring 92 begrenzt. Im Gehäuseteil 30 sind die Schlitze 60 zu erkennen.

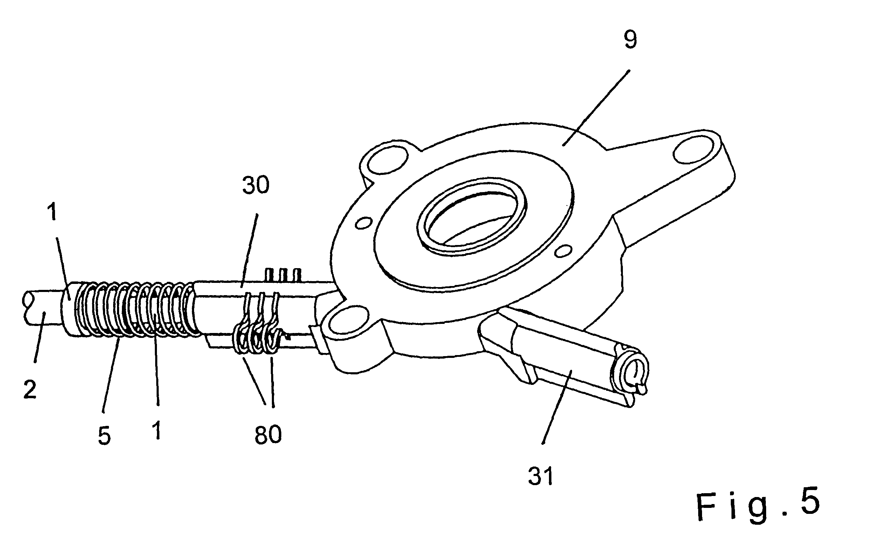

In Figur 5 ist ein Lagerdeckel 9 für eine Seiltrommel eines Bowdenzug-Fensterhebers dargestellt, bei der die Vorrichtung für einen automatischen Seillängenausgleich fertig installiert ist. Zwischen dem Gehäuseteil 30 und einem Bund der Führungshülse 1 stützt sich eine Druckfeder 5 ab. Die das Ende des Bowdenrohrs 2 bildende Führungshülse 1 ist in das Gehäuseteil 30 eingeführt. Die Druckfeder 5 ist bestrebt, die Führungshülse 1 des Bowdenrohrs 2 aus der axialen Aufnahme des Gehäuseteils 30 herauszudrücken. Im Gehäuseteil 30 sind senkrecht zur Längsachse des Gehäuseteils 30 hintereinander angeordnete Schlitze 60 vorgesehen, in die Rastfedern 80 eingesetzt sind. Die Funktionsweise der Vorrichtung für einen Seillängenausgleich erfolgt wie in bezug auf Figur 1 beschrieben.

Es liegt im Rahmen der Erfindung, daß beim Lagerdeckel 9 der Figuren 3 bis 5 Schlitze 60 und Rastfedern 80 nicht nur an dem Getriebeteil 30, sondern auch an dem Getriebeteil 31 vorgesehen sind. Ebenso sind entsprechende Vorrichtungen auch an weiteren Lagerstellen eines Bowdenzug-Fensterhebers, wie etwa an den Seilumlenkrollen vorgesehen.

Die Erfindung beschränkt sich in ihrer Ausführung nicht auf die vorstehend angegebenen Ausführungsbeispiele. Vielmehr sind eine Anzahl von Varianten denkbar, welche von der Erfindung auch bei grundsätzlich anders gearteten Ausführungen Gebrauch machen.

## Patentansprüche

1. Vorrichtung für einen Seillängenausgleich bei Bowdenrohr-Fensterhebern, bei der das Ende eines als Umhüllung des Seiles dienendes Bowdenrohres (2) mit einem Führungsabschnitt (1) versehen ist, der axial verschiebbar in einem ortsfesten Führungselement (3) mit axialem Durchgang geführt wird, und die eine Druckfeder (5) aufweist, die durch Abstützung am Führungsabschnitt bestrebt ist, das Bowdenrohr aus dem Führungselement herauszudrücken, wobei in Längsrichtung des Führungselements hintereinander angeordnete Sperrelemente (8) zum Verhindern einer Rückstellbewegung des Führungsabschnitts vorgesehen sind, die quer zur axialen Bewegungsrichtung des Führungsabschnitts bei einem Herausdrücken des Führungsabschnitts aus dem Führungselement nacheinander vor dem Führungsabschnitt des Bowdenrohrendes zur Anlage kommen,
**dadurch gekennzeichnet,**
**daß** das Führungselement (3) mit quer zur Längsrichtung des axialen Durchgangs verlaufenden Schlitzen (6) versehen ist und als Sperrelemente dienende Rastfedern (8) vorgesehen sind, wobei in dem jeweiligen Schlitz (6) des Führungselements (3) jeweils eine Rastfeder (8) eingesetzt ist.

2. Vorrichtung nach Anspruch 1, **dadurch gekennzeichnet, daß** die Rastfedern (8) jeweils zwei Schenkel (8a, 8b) aufweisen, die mit ihren Innenseiten radial auf den Führungsabschnitt (1) drücken.

3. Vorrichtung nach Anspruch 2, **dadurch gekennzeichnet, daß** bei nicht herausgedrückten Bowdenrohr die Schenkel (8a, 8b) der Rastfedern (8) mit ihren Innenseiten formschlüssig am Führungsabschnitt (1) anliegen.

4. Vorrichtung nach Anspruch 2 oder 3, **dadurch gekennzeichnet, daß** die Schenkel (8a, 8b) der Rastfedern (8) an ihren unteren Enden jeweils einen Vorsprung (81) aufweisen, durch den die Rastfedern (8) in der eingeschnappten Position am Führungselement (3) fixiert werden.

5. Vorrichtung nach mindestens einem der vorangehenden Ansprüche, **dadurch gekennzeichnet, daß** die Rastfedern (8) als Drahformfedern ausgebildet sind.

6. Vorrichtung nach mindestens einem der vorangehenden Ansprüche, **dadurch gekennzeichnet, daß** das einen axialen Durchgang aufweisende Führungselement (3) einen einstückigen Bestandteil (30) des Gehäuses (9) eines Antriebs- oder Getriebeelements des Bowdenrohr-Fensterhebers bildet.

7. Vorrichtung, **dadurch gekennzeichnet, daß** der Führungsabschnitt von einer aus einem hochbelastbaren Kunststoff bestehenden Führungshülse (1) gebildet wird, die in dem axialen Durchgang des Führungselements (3) geführt wird.

8. Vorrichtung nach mindestens einem der vorangehenden Ansprüche
**dadurch gekennzeichnet,**
**daß** das den Sperrelementen (8) zugeordnete Ende des Führungsabschnitts (1) wenigstens eine Stufe (10a, 10b) mit verringertem Durchmesser aufweist, an deren Anschlagfläche (100a, 100b) die Sperrelemente (8) zur Anlage gelangen.

9. Vorrichtung nach Anspruch 8, **dadurch gekennzeichnet, daß** die Höhe der Stufe (10a, 10b) einem Bruchteil des Abstandes (t) benachbarter Sperrelemente (8) entspricht.

## Claims

1. Length-adjusting device for Bowden cable actuated window lifters in which the end of a Bowden cable (2) serving as sheathing for the cable is provided with a guide section (1) which is guided axially displaceable in a locally fixed guide element (3) with axial passage, and which has a compression spring (5) which supported on the guide section endeavours to press the Bowden cable out from the guide element, wherein successively mounted locking elements (8) are provided in the longitudinal direction of the guide element to prevent an axial resetting movement of the guide section whereby as the guide section is pressed out of the guide element the locking elements come to bear transversely to the axial direction of movement of the guide section in succession in front of the guide section of the Bowden cable end,
**characterised in that**
the guide element (3) is provided with slits (6) running across the longitudinal direction of the axial passage and detent springs (8) serving as locking elements are provided whereby a detent spring (8) is inserted in each relevant slit (6) of the guide element (3).

2. Device according to claim 1 **characterised in that** the detent springs (8) each have two arms (8a, 8b) which press radially onto the guide section (1) by their inner sides.

3. Device according to claim 2 **characterised in that** when the Bowden cable is not pressed out the arms (8a, 8b) of the detent springs (8) adjoin the guide section (1) with keyed engagement by their inner sides.

4. Device according to claim 2 or 3 **characterised in that** the arms (8a, 8b) of the detent springs (8) each have at their lower ends a projection (81) through which the detent springs (8) are fixed in the engaged position on the guide element (3).

5. Device according to at least one of the preceding claims **characterised in that** the detent springs (8) are formed as shaped wire springs.

6. Device according to at least one of the preceding claims **characterised in that** the guide element (3) having an axial passage forms an integral structural part (30) of the housing (9) of a drive or gearing element of the Bowden cable window lifter.

7. Device according to at least one of the preceding claims, **characterised in that** the guide section is formed from a guide sleeve (1) made of a high-tensile plastics guided in the axial passage of the guide element (3).

8. Device according to at least one of the preceding claims **characterised in that** the end of the guide section (1) associated with the locking elements (8) has at least one step (10a, 10b) with reduced diameter whereby the locking elements (8) move to contact the stop face (100a, 100b) of same.

9. Device according to claim 8 **characterised in that** the height of the step (10a, 10b) corresponds to a fraction of the distance (t) between adjoining locking elements (8).

## Revendications

1. Dispositif pour un rattrapage de longueur du câble dans des lève-vitres à tube Bowden, dans lequel l'extrémité d'un tube Bowden (2) servant d'enveloppe du câble est pourvue d'un tronçon de guidage (1) qui est guidé de façon axialement mobile dans un élément de guidage stationnaire (3) avec une traversée axiale, et qui comprend un ressort de compression (5) qui, en s'appùyant sur le tronçon de guidage, tend à pousser le tube Bowden hors de l'élément de guidage, et dans lequel sont prévus des éléments d'arrêt (8) agencés les uns derrière les autres en direction longitudinale de l'élément de guidage et destinés à empêcher un mouvement de recul du tronçon de guidage, qui viennent successivement en appui, en avant du tronçon de guidage de l'extrémité du tube Bowden, perpendiculairement à la direction de déplacement axial du tronçon de guidage lors d'une extraction du tronçon de guidage hors de l'élément de guidage,
**caractérisé en ce que**
l'élément de guidage (3) est pourvu de fentes (6) qui s'étendent perpendiculairement à la direction longitudinale de la traversée axiale, et **en ce qu'**il est prévu des ressorts d'enclenchement (8) servant d'éléments d'arrêt, un ressort d'enclenchement respectif (8) étant mis en place dans la fente respective (6) de l'élément de guidage (3).

2. Dispositif selon la revendication 1, **caractérisé en ce que** les ressorts d'enclenchement (8) comprennent chacun deux branches (8a, 8b) qui s'appuient par leurs faces intérieures radialement sur le tronçon de guidage (1).

3. Dispositif selon la revendication 2, **caractérisé en ce que** dans l'état non extrait du tube Bowden, les branches (8a, 8b) des ressorts d'enclenchement (8) s'appliquent par leurs faces intérieures en coopération de formes contre le tronçon de guidage (1).

4. Dispositif selon l'une ou l'autre des revendications 2 et 3, **caractérisé en ce que** les branches (8a, 8b) des ressorts d'enclenchement (8) comprennent à leurs extrémités inférieures des saillies respectives (81) par lesquelles les ressorts d'enclenchement (8) sont fixés dans la position encliquetée sur l'élément de guidage (3).

5. Dispositif selon l'une au moins des revendications précédentes, **caractérisé en ce que** les ressorts d'enclenchement (8) sont réalisés sous la forme de ressorts formés en fil.

6. Dispositif selon l'une au moins des revendications précédentes, **caractérisé en ce que** l'élément de guidage (3) présentant une traversée axiale forme un composant (30) d'un seul tenant du boîtier (9) d'un élément d'entraînement ou de transmission d'un lève-vitre à tube Bowden.

7. Dispositif selon l'une au moins des revendications précédentes, **caractérisé en ce que** le tronçon de guidage est formé par une douille de guidage (1) constituée en matière plastique hautement résistante, qui est guidée dans la traversée axiale de l'élément de guidage (3).

8. Dispositif selon l'une au moins des revendications précédentes, **caractérisé en ce que** l'extrémité du tronçon de guidage (1) associée aux éléments d'arrêt comprend au moins un gradin (10a, 10b) de diamètre réduit sur la surface de butée duquel (100a, 100b) les éléments d'arrêt (8) viennent en appui.

9. Dispositif selon la revendication 8, **caractérisé en ce que** la hauteur du gradin (10a, 10b) correspond à une fraction de la distance (t) d'éléments d'arrêt voisins (8).
